# EUROPEAN PATENT APPLICATION

(11) **EP 4 184 446 A1**
(43) Date of publication of application: **24.05.2023**
(21) Application number: 22209069.8
(22) Date of filing: 23.11.2022
(51) Int. Cl.: G06V 10/40, G06V 10/74, G06F 18/28, G06F 18/21

(54) **METHOD AND SYSTEM FOR IMPROVING TARGET DETECTION PERFORMANCE THROUGH DYNAMIC LEARNING**

(30) Priority: 23.11.2021 KR 20210161959; 27.12.2021 KR 20210188272
(71) Applicant: Virnect Inc., Seoul 04379 (KR)
(72) Inventor: KIM, Ki Young, 04379 Seoul (KR); PARK, Noh Young, 10867 Paju-si, Gyeonggi-do (KR)
(74) Representative: BCKIP Part mbB

(57) **Abstract**

The present disclosure provides a method of improving target detection performance through dynamic learning by a target detection application executed by at least one processor of a terminal, including: acquiring (S101) first target object tracking information including a plurality of first feature points for a target object and a plurality of first descriptors for each of the plurality of first feature points; acquiring (S103) a first captured video obtained by capturing the target object; extracting (S105) target object detection information including a plurality of second feature points and a plurality of second descriptors for each of the plurality of second feature points from the acquired first captured video; detecting (S107) the target object by comparing the extracted target object detection information with the first target object tracking information; acquiring (S109) second target object tracking information obtained by updating the first target object tracking information based on target object detection information for the detected target object; and providing (S111) a target object detection service based on the acquired second target object tracking information.

## Description

### CROSS-REFERENCE TO RELATED APPLICATIONS

This Application claims the benefit of Korean Patent Provisional Application No. 10-2021-0161959 filed on November 23, 2021 and Korean Patent Application No. 10-2021-0188272, filed on December 27, 2021 in the Korean Intellectual Property Office.

### TECHNICAL FIELD

The present disclosure relates to a method and system for improving target detection performance through dynamic learning. More particularly, the present disclosure relates to a method and system for improving detection performance by dynamically updating pattern data pre-constructed for a predetermined target based on an image pattern observed from an actual captured video.

### BACKGROUND

In general, video processing technology for acquiring, identifying, and/or tracking information using a video is utilized in various fields such as medical care, biometrics, military and/or factory automation, and many studies are being conducted.

Various algorithms, such as an object detection algorithm or an object tracking algorithm, exist in such video processing technology depending on the purpose to be utilized.

Here, the object detection algorithm is implemented as an approach that extracts a feature of an object to be searched in advance and detects the corresponding feature in a given video. The object tracking algorithm is an video processing technology that indicates a movement of an object in the corresponding video as trajectory information, and is used in various fields such as a surveillance camera, drone flight stabilization, and an advanced driver assistance system (ADAS) for a vehicle.

Conventionally, in order to implement an object detection and tracking algorithm based on a predetermined video sensor for a moving video (i.e., a continuous image), a method of tracking pixels in continuous images for each image and constructing and classifying a three-dimensional point of matched pixels has been used.

As the method of tracking pixels in the continuous images as above, there is a method of tracking feature points through the Kanade-Lucas-Tomasi (KLT) tracking algorithm, a method of extracting and matching feature points through the Scale-Invariant Feature Transform (SIFT) algorithm, or the like.

However, the related art has a limitation that pattern data pre-constructed to detect a specific object as a target from a predetermined actual captured video(e.g., a descriptor for each feature point for the corresponding object, etc.) does not reflect a capturing environment (e.g., different lighting conditions, capturing timing, and/or camera specifications, etc.) that is different from a capturing environment of a base video used to set the pre-constructed pattern data, or distortion caused by predetermined noise (e.g., light reflection and/or motion blur, etc.).

### SUMMARY

An aspect of the present disclosure provides a method and system for improving detection performance by dynamically updating pre-constructed pattern data for a predetermined target based on an image pattern actually observed from a captured video.

Another aspect of the present disclosure provides a method of improving detection performance for a predetermined target object by dynamically adding pattern data detected from an actual captured video of a target object to pattern data pre-constructed to detect the predetermined target object.

However, the technical problems to be achieved by the embodiments of the present disclosure are not limited to the technical problems as described above, and other technical problems may exist.

According to various embodiments of the present disclosure, a method of improving target detection performance through dynamic learning by a target detection application executed by at least one processor of a terminal includes: acquiring first target object tracking information including a plurality of first feature points for a target object and a plurality of first descriptors for each of the plurality of first feature points; acquiring a first captured video obtained by capturing the target object; extracting target object detection information including a plurality of second feature points and a plurality of second descriptors for each of the plurality of second feature points from the acquired first captured video; detecting the target object by comparing the extracted target object detection information with the first target object tracking information; acquiring second target object tracking information obtained by updating the first target object tracking information based on target object detection information for the detected target object; and providing a target object detection service based on the acquired second target object tracking information.

The acquiring second target object tracking information may include calculating a plurality of feature point matching scores by comparing each of the plurality of first descriptors and each of the plurality of second descriptors.

The acquiring second target object tracking information may include: comparing each of the plurality of calculated feature point matching scores with a predetermined threshold; detecting a feature point matching score exceeding the predetermined threshold; and determining the second descriptor having the detected feature point matching score as a third descriptor.

The acquiring second target object tracking information may further include adding the determined third descriptor as a descriptor for detecting and tracking a matched feature point.

The acquiring second target object tracking information may include: acquiring a rotation parameter (R) value and a translation parameter (T) value for the third descriptor based on the target object detection information and the first target object tracking information; and matching and storing the acquired rotation parameter value and translation parameter value with the third descriptor.

The detecting the target object may include calculating a comprehensive matching score for all of the plurality of first descriptors and the plurality of second descriptors based on the plurality of calculated feature point matching scores.

The detecting the target object may further include detecting the target object in the first captured video when the calculated comprehensive matching score exceeds a predetermined threshold.

According to various embodiments of the present disclosure, a system for improving target detection performance through dynamic learning includes: at least one or more memories; and at least one or more processors, wherein an instruction is included in at least one application stored in the memory and executed by the processor to improve target detection performance based on dynamic learning, the instruction being configured to: control to acquire first target object tracking information including a plurality of first feature points for a target object and a plurality of first descriptors for each of the plurality of first feature points, control to acquire a first captured video obtained by capturing the target object, control to extract target object detection information including a plurality of second feature points and a plurality of second descriptors for each of the plurality of second feature points from the acquired first captured video, control to detect the target object by comparing the extracted target object detection information with the first target object tracking information, control to acquire second target object tracking information obtained by updating the first target object tracking information based on target object detection information for the detected target object, and control to provide a target object detection service based on the generated second target object tracking information.

The application may compare each of the plurality of first descriptors and the plurality of second descriptors to calculate a plurality of feature point matching scores, the application may determine, as a third descriptor, a second descriptor having a feature point matching score exceeding a predetermined threshold among the plurality of calculated feature point matching scores, and the application may add the determined third descriptor as the first descriptor matching the third descriptor.

The application may calculate a comprehensive matching score for all of the plurality of first descriptors and the plurality of second descriptors based on the plurality of calculated feature point matching scores and the application may detect the target object in the first captured video when the calculated comprehensive matching score exceeds a predetermined threshold.

As described above, According to a method and system for improving target detection performance through dynamic learning according to an embodiment of the present disclosure, by dynamically adding pattern data detected from an actual captured video of a target object to pattern data pre-constructed to detect a predetermined target object, it is possible to implement dynamic training (dynamic learning) of including even distortion due to a predetermined noise (e.g., light reflection and/or motion blur, etc.) caused by the acquisition of the actual captured video in base data that can be used when the target object is detected, in a capturing environment different from a capturing environment of the base video used to set the pre-constructed pattern data.

In addition, according to the method and system for improving target detection performance through dynamic learning according to the embodiment of the present disclosure, by performing the dynamic training as described above, it is possible to accumulate pattern data (error data) optimized for a capturing environment (e.g., camera specifications, capturing timing, and/or lighting conditions, etc.), in which the corresponding actual captured video is captured, as base data for detecting the target object.

In addition, according to a method and system for improving target detection performance through dynamic learning according to an embodiment of the present disclosure, by dynamically accumulating a pattern data detected from the actual captured video on base data for detecting the corresponding target object, it is possible to support easy detection of a desired target object by using target detection data specialized for each capturing environment using regardless of noise caused by the capturing environment, thereby improving the detection performance of the corresponding target object.

However, the effects that can be obtained from the present disclosure are not limited to the effects mentioned above, and other effects not mentioned can be clearly understood from the description below.

### BRIEF DESCRIPTION OF THE DRAWINGS

FIG. 1 is a conceptual diagram of a system for improving target detection performance through dynamic learning according to an embodiment of the present disclosure.

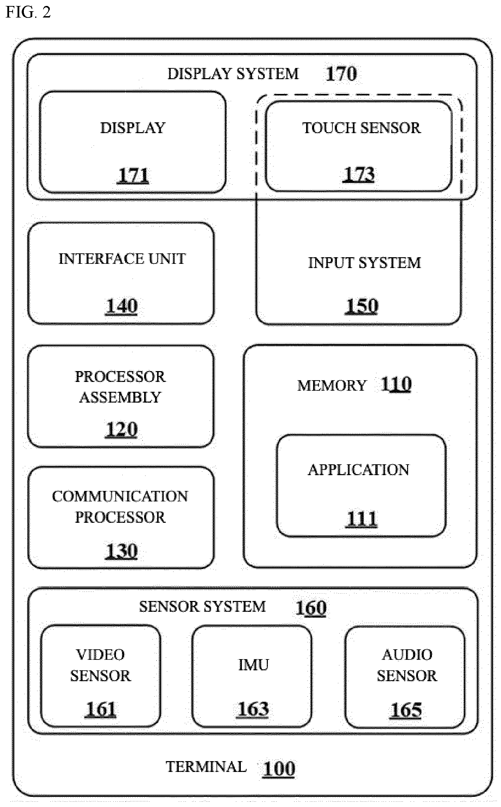

FIG. 2 is an internal block diagram of a terminal according to an embodiment of the present disclosure.
FIG. 3 is a flowchart for describing a method of improving target detection performance through dynamic learning according to an embodiment of the present disclosure.
FIG. 4 is an example of a conceptual diagram for describing the method of improving target detection performance through dynamic learning according to an embodiment of the present disclosure.

### DETAILED DESCRIPTION

Since the present disclosure may be variously modified and have several exemplary embodiments, specific exemplary embodiments will be illustrated in the accompanying drawings and be described in detail in a detailed description. Various effects and features of the present disclosure and methods accomplishing them will become apparent from the following description of embodiments with reference to the accompanying drawings. However, the present disclosure is not limited to the embodiments disclosed below, but may be implemented in various different forms. In the following embodiment, terms such as first, second, etc., are used for the purpose of distinguishing one component from another, not in a limiting sense. In addition, singular forms include plural forms unless interpreted otherwise in context. In addition, the terms "include" or "have" means that features or elements described in the specification are present, and unless specifically limited, and do not preclude the possibility that one or higher other features or components may be added unless specifically limited. In addition, sizes of components may be exaggerated or reduced in the accompanying drawings for convenience of explanation. For example, since sizes and thicknesses of the respective components illustrated in the drawings are arbitrarily illustrated for convenience of explanation, the present disclosure is not necessarily limited to those illustrated in the drawings.

Hereinafter, embodiments of the present disclosure will be described in detail with reference to the accompanying drawings. Like reference numerals designate like elements throughout the specification, and overlapping descriptions of the elements will not be provided.

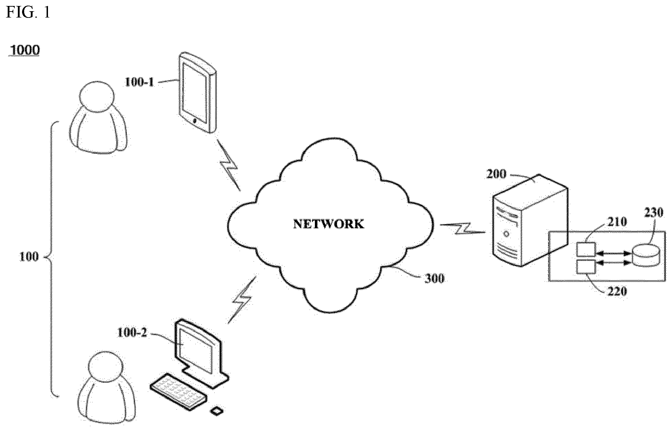

FIG. 1 is a conceptual diagram of a system for improving target detection performance through dynamic learning according to an embodiment of the present disclosure.

In addition, a processor assembly 120 may be implemented using at least one of application specific integrated circuits (ASICs), digital signal processors (DSPs), digital signal processing devices (DSPDs), programmable logic devices (PLDs), field programmable gate arrays (FPGAs), controllers, micro-controllers, microprocessors, and electric units for performing other functions.

A communication processor 130 may include one or more devices for communicating with an external device. The communication processor 130 may communicate through a wireless network.

In detail, the communication processor 130 may communicate with a terminal 100 storing a content source for implementing a target detection service environment based on dynamic learning, and communicate with various user input components such as a controller that receives a user input.

In an embodiment, the communication processor 130 may transmit/receive various data related to the target detection service based on dynamic learning to another terminal 100 and/or an external server, etc.

This communication processor 130 may wirelessly transmit/receive data with at least one of a base station, an external terminal 100, and an arbitrary server on a mobile communication network constructed through a communication device capable of performing technical standards, a communication method (e.g., Long Term Evolution (LTE), Long Term Evolution-Advanced (LTE-A), 5G New Radio (NR), WIFI), a short-distance communication method, etc., for mobile communication.

A sensor system 160 may include various sensors such as an image sensor 161, an inertial measurement unit (IMU) 163, an audio sensor 165, a distance sensor, a proximity sensor, and a contact sensor.

Here, the image sensor 161 may capture an image and/or a video of a physical space around the terminal 100.

In an embodiment, the image sensor 161 may capture and acquire a video (e.g., a reference target object image and/or a first captured image, etc.) related to the target detection service based on dynamic learning.

In addition, the image sensor 161 may be disposed on front or/and rear surfaces of the terminal 100 to capture a direction side in which the image sensor 160 is disposed, thereby acquiring a video, and capture a physical space through a camera disposed toward an outside of the terminal 100.

The image sensor 161 may include an image sensor device and a video processing module. Specifically, the image sensor 161 may process still or moving video obtained by an image sensor device (e.g., CMOS or CCD).

In addition, the image sensor 161 may process a still or moving video obtained through the image sensor device using a video processing module to extract necessary information, and transmit the extracted information to the processor.

The image sensor 161 may be a camera assembly including at least one camera. The camera assembly may include a general camera that captures a visible light band, and may further include a special camera such as an infrared camera or a stereo camera.

In addition, the image sensor 161 as described above may operate while being included in the terminal 100 according to an embodiment, and may be included in an external device (e.g., an external server, etc.) and may operate through interworking based on the above-described communication processor 130 and/or interface unit 140.

The inertial measurement unit (IMU, 163) may detect at least one or more of a motion and an acceleration of the terminal 100. For example, the position sensor 163 may be composed of a combination of various position sensors such as an accelerometer, a gyroscope, and a magnetometer.

In addition, the inertial measurement unit (IMU) 163 may recognize spatial information about the physical space around the terminal 100 by interworking with the position communication processor 130 such as GPS of the communication processor 130.

The audio sensor 165 may recognize a sound around the terminal 100.

In detail, the audio sensor 165 may include a microphone capable of detecting a voice input of a user using the terminal 100.

In the embodiment, the audio sensor 165 may receive voice data necessary for the target detection service based on dynamic learning from a user.

The interface unit 140 may communicatively connect the terminal 100 to one or more other devices. In detail, the interface unit 140 may include a wired and/or wireless communication device compatible with one or more different communication protocols.

The terminal 100 may be connected to various input/output devices through the interface unit 140.

For example, the interface unit 140 may be connected to an audio output device such as a headset port or a speaker to output audio.

For example, although it has been described that an audio output device is connected through the interface unit 140, an embodiment in which the audio output device is installed inside the terminal 100 may also be included.

Also, for example, the interface unit 140 may be connected to an input device such as a keyboard and/or a mouse to acquire a user input.

For example, although it has been described that an audio output device is connected through the interface unit 140, an embodiment in which the audio output device is installed inside the terminal 100 may also be included.

The interface unit 140 may be configured to include at least one of a wired/wireless headset port, an external charger port, a wired/wireless data port, a memory card port, a port for connection of a device including an identity module, an audio input/output (I/O) port, a video input/output (I/O) port, an earphone port, a power amplifier, an RF circuit, a transceiver, and other communication circuits.

The input system 150 may detect a user's input (e.g., a gesture, a voice command, an operation of a button, or another type of input) related to the target detection service based on dynamic learning.

In detail, the input system 150 may include a predetermined button, a touch sensor, and/or an image sensor 161 for receiving a user motion input, etc.

Also, the input system 150 may be connected to an external controller through the interface unit 140 to receive the user input.

The display system 170 may output various information related to the target detection service based on dynamic learning as a graphic image.

In the embodiment, the display system 170 may display a video obtained by capturing a predetermined target object and/or various user interfaces, etc.

The display 130 may include at least one of a liquid crystal display (LCD), a thin film transistor-liquid crystal display (TFT LCD), an organic light-emitting diode (OLED), a flexible display, a 3D display, and an e-ink display.

The above components may be disposed in a housing of the terminal 100, and the user interface may include a touch sensor 173 on the display 171 configured to receive a user touch input.

In detail, the display system 170 may include a display 171 that outputs an image, and a touch sensor 173 that detects the user's touch input.

For example, the display 171 may form a layer structure with the touch sensor or may be integrally formed with the touch sensor, thereby implementing a touch screen. The touch screen may function as the user input unit which provides an input interface between the terminal 100 and the user, and may provide an output interface between the terminal 100 and the user.

Meanwhile, the terminal 100 according to an embodiment of the present disclosure may perform various functional operations necessary for the target detection service based on dynamic learning by using at least one algorithm.

In the embodiment, the terminal 100 may perform a functional operation of extracting at least one feature point for a predetermined target object and a descriptor for each feature point based on an algorithm such as FastFeatureDetector, MSER, SimpleBlobDetector and/or GFTTDetector.

Also, according to an embodiment, the terminal 100 may further perform at least a part of functional operations performed by the database server 200 to be described later.

### - Database server 200

Meanwhile, the database server 200 according to an embodiment of the present disclosure may perform a series of processes for providing the target detection service based on dynamic learning.

In detail, in the embodiment, the database server 200 may exchange data necessary for the dynamic learning-based target detection process to be driven in an external device such as the terminal 100 with the external device, thereby providing the target detection service based on dynamic learning.

In more detail, in the embodiment, the database server 200 may provide the environment in which the application 111 may operate in an external device (in the embodiment, a mobile type computing device 100-1 and/or a desktop type computing device 100-2, etc.).

To this end, the database server 200 may include an application program, data, and/or an instruction for operating the application 111, and may transmit/receive data based thereon with the external device.

Also, in the embodiment, the database server 200 may acquire first target object tracking information for a target object that is a target object to be detected in a predetermined video.

Here, the first target object tracking information may be information including at least one feature point preset for the target object and a descriptor for the feature point.

In addition, in the embodiment, the database server 200 may acquire a first captured video obtained by capturing the target object.

In addition, in the embodiment, the database server 200 may extract target object detection information based on the first captured video.

Here, the target object detection information may be information that includes an observation feature point that is at least one feature point for a predetermined object in a predetermined captured video, and at least one observation descriptor that is a descriptor for each observation feature point.

In addition, in the embodiment, the database server 200 may detect the target object from the first captured video based on the extracted target object detection information.

Also, in the embodiment, the database server 200 may generate second target object tracking information based on the target object detection information for the detected target obj ect.

Here, the second target object tracking information may refer to information obtained by updating the first target object tracking information based on the target object detection information.

Also, in the embodiment, the database server 200 may implement the target object detection service based on the generated second target object tracking information.

Also, in the embodiment, the database server 200 may perform a predetermined functional operation necessary for the target detection service based on dynamic learning by using at least one algorithm disclosed.

In the embodiment, the database server 200 may perform a functional operation of extracting at least one feature point for a predetermined target object and a descriptor for each feature point based on an algorithm such as FastFeatureDetector, MSER, SimpleBlobDetector and/or GFTTDetector.

In more detail, in the embodiment, the database server 200 may read a predetermined algorithm driving program constructed to perform the above functional operation from the memory module 230, and perform the corresponding functional operation according to the read predetermined algorithm system.

In this case, according to an embodiment, the above predetermined algorithm may be directly included in the database server 200 or may be implemented in a device and/or server separate from the database server 200, thereby performing the functional operation for the target detection service based on dynamic learning.

In the following description, it will be described that the predetermined algorithm is implemented by being included in the database server 200, but is not limited thereto.

In addition, in the embodiment, the database server 200 may store and manage various application programs, instructions, and/or data, etc., for implementing the target detection service based on dynamic learning.

In the embodiment, the database server 200 may store and manage at least one or more first target object tracking information, a reference target object video, the first captured video, the feature point and/or the descriptor detection algorithm for each feature point, the target object detection information, the matching score, the second target object tracking information, predetermined threshold data, a rotation parameter (R) value and/or translation (T) parameter, etc.

Meanwhile, referring further to FIG. 1, in the embodiment, the database server 200 as described above may be implemented in a predetermined computing device that includes at least one or more processor modules 210 for data processing, at least one or more communication modules 220 for exchanging data with an external device, and at least one or more memory modules 230 for storing various application programs, data, and/or instructions for providing the target detection service based on dynamic learning.

Here, the memory module 230 may store any one or more of an operating system (OS), various application programs, data, and instructions for providing the target detection service based on dynamic learning.

Also, the memory module 230 may include a program area and a data area.

Here, the program area according to the embodiment may be linked between an operating system (OS) for booting a server and functional elements, and the data area may store data generated according to the use of the server.

In the embodiment, the memory module 230 may be various storage devices such as ROM, RAM, EPROM, flash drive, and hard drive, and may be a web storage that performs a storage function of the memory module 230 on the Internet.

In addition, the memory module 230 may be a recording medium in a form detachable on the server.

Meanwhile, the processor module 210 may control the overall operation of each unit described above in order to implement the target detection service based on dynamic learning.

The processor module 210 may be a system-on-a-chip (SOC) suitable for a server including a central processing unit (CPU) and/or a graphics processing unit (GPU), etc., and may execute an operating system (OS) and/or an application program, etc., that are stored in the memory module 230, and control each component mounted in the server.

In addition, the processor module 210 may internally communicate with each component by a system bus, and may include one or more predetermined bus structures including a local bus.

In addition, the processor module 210 may be implemented using at least one of application specific integrated circuits (ASICs), digital signal processors (DSPs), digital signal processing devices (DSPDs), programmable logic devices (PLDs), field programmable gate arrays (FPGAs), controllers, micro-controllers, microprocessors, and electric units for performing other functions.

In the above description, it has been described that the database server 200 according to the embodiment of the present disclosure performs the functional operation as described above, but according to the embodiment, various embodiments in which at least some of the functional operations performed by the database server 200 may be performed by an external device (e.g., terminal 100, etc.), the database server 200 may further perform at least some of the functional operations performed by the external device, and the like may be implemented.

### - Method of improving target detection performance based on dynamic learning

Hereinafter, a method of improving target detection performance based on dynamic learning by the application 111 executed by at least one processor of the terminal 100 according to an embodiment of the present disclosure will be described in detail with reference to the accompanying drawings.

In the embodiment of the present disclosure, at least one or more processors of the terminal 100 may execute at least one or more applications 111 stored in at least one or more memories 110 or may cause the applications 111 to operate in a background state.

Hereinafter, performing the method of providing a target detection service based on dynamic learning by the at least one processor operating to execute the instruction of the application 111 described above will be briefly described as being performed by the application 111.

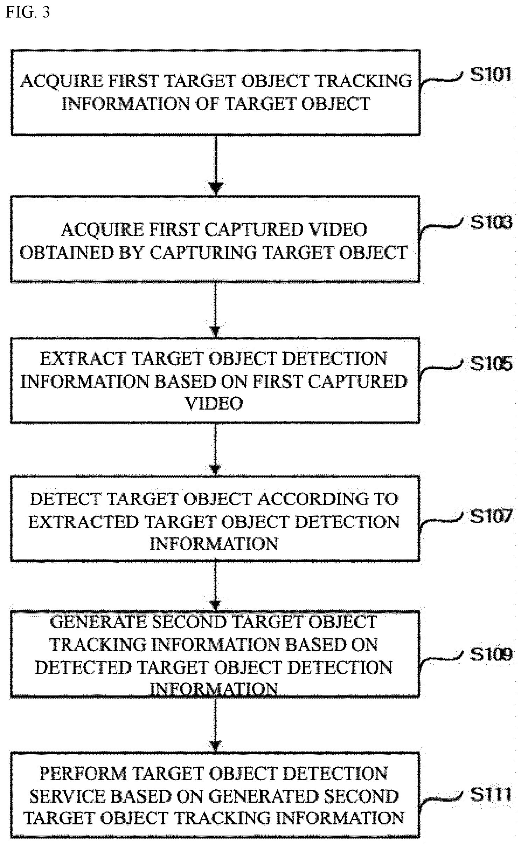

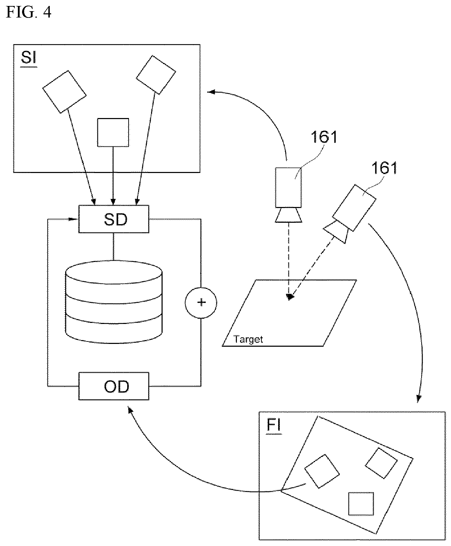

FIG. 3 is a flowchart for describing a method of improving target detection performance through dynamic learning according to an embodiment of the present disclosure, and FIG. 4 is an example of a conceptual diagram for describing the method of improving target detection performance through dynamic learning according to an embodiment of the present disclosure.

Referring to FIGS. 3 and 4, in the embodiment, the application 111 executed by at least one or more processors of the terminal 100 or operating in a background state may acquire the first target object tracking information for the target object (S101).

Here, the target object tracking information according to the embodiment may be information including a plurality of feature points for a target object that is a target object to be detected in a predetermined video, and each descriptor for the feature points. Such target object tracking information may be generated by learning based on an image when the target object is viewed from at least one viewpoint. The application 111 may detect a target object from an image in which the target object is captured based on the target object tracking information.

In this case, in the embodiment, the descriptor means that a gradient histogram of pixels belonging to each block is calculated by dividing pixels around the corresponding feature point into blocks of a predetermined size. Such a descriptor may be influenced by brightness, color, direction, and/or size, etc., around the feature point when the target object is captured.

In addition, the first target object tracking information according to the embodiment may be information that includes a plurality of feature points (hereinafter, reference feature points) preset for the target object and descriptors (SD: hereinafter, reference descriptors) for each of the plurality of feature points.

In the embodiment, the application 111 interworks with an external computing device (in the embodiment, the database server 200, etc.) and/or executes its own process to acquire a reference target object video SI obtained by capturing the target object from at least one viewpoint based on a predetermined image sensor 161.

In this case, the preferred target object video may be a video obtained in the capturing environment that satisfies predetermined photographing conditions (e.g., the capturing conditions in which, when the front of the target object is viewed in the vertical direction, the target object has uniform illuminance (brightness), satisfies a predetermined shake or less, etc.), but is not limited thereto.

Also, the application 111 may analyze the obtained target object video to extract a plurality of feature points for the target object in the target object video and descriptors for each of the plurality of feature points.

For example, the application 111 may extract at least one feature point for the target object and a descriptor for each of the plurality of feature points based on an algorithm such as FastFeatureDetector, MSER, SimpleBlobDetector, and/or GFTTDetector. However, this is only an example and is not limited thereto.

In addition, the application 111 may determine the plurality of feature points for the extracted target object as the reference feature points, and generate the first target object tracking information using the descriptor for each of the plurality of feature points as the reference descriptor (SD) for each feature point.

The first target object tracking information may be stored in the database server 200 and then provided to the applications 111 of the various terminals 100 that detect/track the first target object and provide a service. The applications 111 may detect and track the first target object in the captured video obtained by capturing the first target object directly captured from the terminal 100 through the first target object tracking information.

In this case, the difference between the first target object tracking information and the image analysis data of the captured video occurs according to the characteristics, the capturing direction (capturing timing), and the capturing environment of the camera of the terminal 100 in which the application 111 is installed, so it may be difficult to accurately detect or track the first target object. That is, even if the target object is captured at the same timing as the target object tracking information, the target object video may be different from the image used for learning depending on the capturing environment (e.g., ambient light illuminance, irradiation direction, and a degree of shake during capturing). In addition, the target object video may be different from the image used for learning depending on the camera specifications (e.g., lens specifications, image sensor specifications, etc.) of the terminal 100 in which the application 111 is installed.

Hereinafter, the method of further improving detection and tracking performance of a target object in various dynamic environments of the application 111 in which the first target object tracking information is acquired (e.g., received or directly generated by the database server 200) will be mainly described.

In addition, in the embodiment, the application 111 may acquire a first captured video FI obtained by capturing the target object (S103).

In the embodiment, the application 111 may acquire a first captured video FI obtained by capturing the target object at a certain timing by interworking a predetermined image sensor 161.

In this case, the captured video according to the embodiment may be a video captured by the image sensor 161 under various capturing environments (e.g., various capturing timings, lighting conditions and/or image sensor 161 specifications, etc.), and may be implemented with different qualities according to the capturing environments.

In addition, in the embodiment, the application 111 may extract the target object detection information based on the first captured video FI (S105).

Here, the target object detection information according to the embodiment may be information that includes a plurality of observation feature points obtained by extracting a plurality of feature points for a predetermined object in a predetermined captured video, and observation descriptors for each of the plurality of observation feature points.

In detail, in the embodiment, the application 111 may extract the target object detection information in the first captured video FI by interworking with a feature detector.

In this case, for example, the feature detector may extract at least one feature point for a predetermined object in the first captured video FI and the descriptors for each of the at least one feature point based on an algorithm such as FastFeatureDetector, MSER, SimpleBlobDetector, and/or GFTTDetector. However, this is only an example and is not limited thereto.

However, in the embodiment, it will be described that the same algorithm as the feature detector used to generate the first target object tracking information is used.

In addition, in the embodiment, the application 111 may detect a target object according to the extracted target object detection information (S107).

In detail, in the embodiment, the application 111 may detect the corresponding target object from the first captured video FI based on the first target object tracking information and the target object detection information.

In more detail, in the embodiment, the application 111 may compare each of the reference descriptors SD for each of the plurality of reference feature points of the first target object tracking information and each of the observation descriptors for each of the plurality of observation feature points of the target object detection information to calculate the matching score between the feature points.

In the embodiment, the application 111 may calculate the matching scores for each of the plurality of feature points by comparing the reference descriptors SD and the observation descriptors, respectively, with each other.

In addition, the application 111 may calculate a comprehensive matching score for the entire reference descriptors SD and observation descriptors by performing a predetermined operation (e.g., an average operation, an addition operation, etc.) based on the calculated matching scores for each feature point.

In addition, when the calculated comprehensive matching score satisfies a predetermined condition (e.g., an average of the matching scores for each of the plurality of feature points is greater than or equal to a predetermined value, and the like), it may be determined that the target object is detected from the first captured video FI.

In addition, the application 111 may repeat steps S105 and S107 to track the target object in the captured video that is continuously captured after detecting the target object.

In detail, the application 111 may acquire second to N-th frame videos (i.e., video tracking the target object) at a predetermined frame interval in the captured video continuously captured by the terminal 100, and extract the observation feature points and acquire the observation descriptors for each observation feature point even from the acquired second to N-th frame videos.

In addition, the application 111 may update the reference descriptor SD for the target object later based on the observation descriptor acquired when the target object is detected and the observation descriptor acquired when the target object is tracked.

Meanwhile, in the embodiment, when there is a reference feature point having a plurality of matching reference descriptors SD among at least one reference feature point of the first target object tracking information, the application 111 may calculate a plurality of feature point matching scores by comparing each of the plurality of reference descriptors SD and each of the observation descriptors corresponding thereto.

Also, the application 111 may calculate a plurality of comprehensive matching scores based on the matching scores for each of the plurality of feature points reflecting each of the plurality of calculated feature point matching scores.

In addition, when at least one of the calculated comprehensive matching scores is greater than or equal to the preset threshold, the application 111 may be determined that the target object is detected from the first captured video FI.

Alternatively, when the result of the predetermined operation (e.g., average operation, addition operation, etc.) based on the plurality of calculated comprehensive matching scores is greater than or equal to the preset threshold, the application 111 may determine that the target object is detected from the first captured video FI.

That is, when there are a plurality of reference descriptors SD for one reference feature point of the target object due to update, etc., if at least one of the plurality of reference descriptors SD satisfies a predetermined matching threshold or a result of a predetermined operation (e.g., average operation, addition operation, etc.) based on the plurality of reference descriptors SD satisfies a predetermined matching threshold, the application 111 may determine that the target object is detected.

Accordingly, the application 111 may support the implementation of detecting a corresponding target object by systematically and effectively applying various types of descriptors for one feature point.

Also, in the embodiment, the application 111 may generate the second target object tracking information based on the target object detection information for the detected target object (S109).

Here, the second target object tracking information according to the embodiment may refer to the information obtained by updating the reference descriptor SD of the first target object tracking information based on the target object detection information.

In detail, in the embodiment, the application 111 may generate the second target object tracking information by adding the observation descriptor of the target object detection information for the detected target object to the first target object tracking information.

In more detail, in the embodiment, the application 111 may generate the second target object tracking information by adding the observation descriptors for each of the plurality of observation feature points of the target object detection information as the reference descriptors for each of the plurality of reference feature points corresponding to each of the plurality of observation feature points in the first target object tracking information SD.

That is, in the embodiment, the second target object tracking information may be implemented in a form in which the plurality of reference descriptors SD (i.e., the plurality of reference descriptors SD including the existing reference descriptor SD in the embodiment and the observation descriptor newly added as described above) are matched for each of the at least one reference feature point.

In this case, in the embodiment, the application 111 may generate the second target object tracking information by adding the observation descriptor (OD, hereinafter, a first observation descriptor) having a feature point matching score exceeding a predetermined threshold to the first target object tracking information among the matching scores for each of the plurality of feature points calculated by comparing the detection descriptor for each of the plurality of observation feature points and the reference descriptors for each of the plurality of reference feature points corresponding thereto.

That is, the application 111 may generate the second target object tracking information by adding the first observation descriptor OD having the feature point matching score that satisfies the predetermined threshold (e.g., a preset numerical value, etc.) as the reference descriptor SD for the reference feature point corresponding to the corresponding observation feature point.

In this way, the application 111 may dynamically add the pattern data (in the embodiment, the target object detection information) detected from the actual captured video of the target object to the pre-constructed pattern data (in the embodiment, the first target object tracking information) in order to detect the predetermined target object.

Accordingly, the application 111 may implement dynamic training that includes even distortion due to a predetermined noise (e.g., light reflection and/or motion blur, etc.) according to the acquisition of the actual captured video (in the embodiment, the first captured video FI) in the capturing environment different from the capturing environment of the base video for setting the pre-constructed pattern data in the base data that may be used when the target object is detected.

Meanwhile, step S109 may be performed by the database server 200 that has received the target object detection information from the application 111.

In detail, the database server 200 may provide the first target object tracking information to different terminals 100, and receive the target object detection information for updating the first target object tracking information from different terminals 100, respectively, to generate the second target object tracking information based on the target object detection information.

In this case, the database server 200 may generate different target object tracking information for each predetermined standard.

In detail, the database server 200 may generate target object tracking information, respectively, optimized for detecting the target object according to various capturing conditions such as the specifications of the terminals 100, the capturing position, and may provide the target object tracking information optimized for the situation of the corresponding terminal 100 when the application 111 of the corresponding terminal 100 requests information for detecting the first target object.

For example, the database server 200 may generate different target object tracking information updated by dynamic training according to the camera specification of the terminal 100, and provide different target object tracking information according to the camera specifications or/and capturing environment when the application requests the target object tracking information.

In detail, the database server 200 may request the camera specification when the first application requests the target object tracking information, and detect the first target object tracking information most matching the requested camera specification among the plurality of target object tracking information for detecting the first target object corresponding to the requested camera specification. In this case, the plurality of target object tracking information may be separately trained for each lens specification range and image sensor range. In detail, during the dynamic training by dividing a focus parameter of a lens into at least two or more ranges, only the image captured in the camera specification belonging to the range of the focus parameter of the corresponding lens may be utilized.

Also, in the case of outdoors, the database server 200 may separately perform the dynamic training according to images captured for each capturing time to generate the dynamically trained target object tracking information for each capturing time.

For example, the plurality of dynamically trained target object tracking information may include tenth target object tracking information dynamically trained with images photographed in a direction of sunlight from 09 to 12 o'clock, eleventh target object tracking information dynamically trained with images captured in a direction of sunlight from 12:00 to 15:00, and the like.

In this way, at the time when the first application requires the tracking of the first target object, the database server 200 may transmit twentieth target object tracking information that matches the camera specifications of the terminal in which the first application is installed and matches the capturing time when the tracking information is requested. In this case, upon request according to the capturing time, the twentieth target object tracking information matching the capturing time and twentieth-one target object tracking information matching the next capturing time may be further transmitted, so it is possible to utilize different target object tracking information depending on the timing when the first target object is tracked.

Meanwhile, in the embodiment, the application 111 may match and store each value of the rotation parameter R and the translation parameter T of the image sensor 161 that captures the first captured video FI to the first observation descriptor OD stored as an additional reference descriptor SD as described above.

For reference, the rotation parameter R and the translation parameter T may be parameters for describing a transformation relationship between a coordinate system of the image sensor 161 and a world coordinate system, and may be parameters expressed according to rotation and translation transformation between the two coordinate systems.

In detail, the application 111 may calulate the rotation parameter R value and translation parameter T value (hereinafter, RT value) for the image sensor 161 that has captured the first captured video FI based on the first target object tracking information and the target object detection information.

In the embodiment, the application 111 may calculate the RT value based on the position conversion relationship between the observation feature point and/or the observation descriptor of the target object detection information and the reference feature point and/or the reference descriptor SD of the first target object tracking information.

That is, the application 111 may determine how the rotation angle and position of the image sensor 161 changed when capturing the first captured video FI in comparison with the rotation angle and position of the image sensor 161 when capturing the above-described reference target object video SI.

Also, the application 111 may store and manage the RT value calculated as above by matching the RT value with the first observation descriptor OD.

Accordingly, the application 111 may be implemented in the form in which the second target object tracking information includes the plurality of reference descriptors SD (i.e., the plurality of reference descriptors SD including the reference descriptor SD that already existed in the embodiment and the first observation descriptor OD newly added as described above) for each of the at least one reference feature point of the second target object tracking information and the RT value matching the corresponding first observation descriptor OD.

In this way, the application 111 may support to generate the second target object tracking information by performing the update on the reference descriptor SD based on the RT value later. A detailed description thereof will be provided later.

In another embodiment, the application 111 may update the reference descriptor SD based on the first observation descriptor OD in different ways depending on whether the predetermined threshold is exceeded, so it is possible to generate the second target object tracking information.

In detail, the application 111 may compare the feature point matching score for the first observation descriptor OD (hereinafter, the first feature point matching score) with the predetermined threshold (e.g., a preset numerical value).

In addition, the application 111 may generate 1) the second target object tracking information by adding the first observation descriptor OD to the first target object tracking information in the manner described above when the first feature point matching score is greater than or equal to the predetermined threshold as the result of the comparison.

In other words, the application 111 may generate the second target object tracking information by performing the update in which the first observation descriptor OD is added as the reference descriptor SD for the reference feature point corresponding to the observation feature point of the first observation descriptor OD when the first feature point matching score is greater than or equal to the predetermined threshold.

On the other hand, the application 111 may generate 2) the second target object tracking information by updating the reference descriptor (SD) based on the RT value when the first feature point matching score is equal to or less than the predetermined threshold as the result of the comparison.

In detail, when the first feature point matching score is equal to or less than the predetermined threshold, the application 111 may transform each of the reference descriptors SD for each of the reference feature points of the first target object tracking information based on the RT value of the first observation descriptor OD(hereinafter, first RT value).

In more detail, the application 111 may transform, based on the first RT value of the first observation descriptor OD, at least one reference descriptor for which the reference descriptor SD update has not been performed (i.e., the predetermined first observation descriptor OD is not added) because it does not satisfy the predetermined threshold or greater in the first target object tracking information(hereinafter, referred to as residual reference descriptors).

In the embodiment, the application 111 may use the first RT value to change the predetermined second to N residual reference descriptors (in the embodiment, information such as brightness, color, direction, and/or size around the feature point for the corresponding reference descriptor SD).

Also, the application 111 may calculate the matching scores for each of the feature points by comparing each of the at least one transformed residual reference descriptor with each of the observation descriptors corresponding thereto.

To be continue, the application 111 may detect, as the first observation descriptor (OD), the observation descriptor having the feature point matching score exceeding the predetermined threshold, from among the calculated matching scores for each of the at least one feature point.

Also, the application 111 may generate the second target object tracking information by adding the detected first observation descriptor OD to the reference descriptor SD (i.e., here, the residual reference descriptor corresponding to the first observation descriptor OD) corresponding thereto.

In this way, the application 111 may minimize the problem in that an inaccurate matching rate is calculated due to noise (e.g., light reflection and/or motion blur, etc.) according to the video capturing environment and thus the descriptor update is missed by updating the remaining reference descriptors SD that do not satisfy the predetermined matching rate according to the RT value for the reference descriptor SD satisfying the predetermined matching rate and by determining based on the updated remaining reference descriptors SD whether the matching rate is satisfied through comparison with the descriptor newly observed from the first captured video FI.

Again, in the embodiment, the application 111 may set the second target object tracking information generated as the first target object tracking information to repeat the above-described dynamic learning-based target detection performance improvement process.

Accordingly, the application 111 may accumulate, as the base data for detecting the target object, the pattern data for the target object optimized for the environment (e.g., camera specifications, capturing timing, and/or lighting conditions, etc.) in which the first captured video FI is captured, and support the easy detection of the desired target object regardless of the noise caused by the corresponding capturing environment based on the accumulated pattern data, thereby improving the detection performance of the target object.

Also, in an embodiment, the application 111 may perform the target object detection service based on the generated second target object tracking information (S111).

That is, in the embodiment, the application 111 may implement the target object detection service based on the generated second target object tracking information by interworking with other applications 111 operating on the terminal 100 and/or an external application 111 operating on external computing devices (e.g., external terminals 100 and/or servers, etc.).

In detail, in the embodiment, the application 111 may provide the generated second target object tracking information to the other applications 111 and/or the external application 111.

In this case, in the embodiment, the other applications 111 and/or the external application 111 receiving the second target object tracking information may perform a series of functional operations for the object detecting service video-based and/or the object tracking service based on the received second target object tracking information.

Therefore, the application 111 may perform the target object detection service on the second target object tracking information by interworking with the other applications 111 and/or the external application 111.

Therefore, the application 111 may support to smoothly detect the desired target object from the captured video while minimizing the effect of noise according to the environment in which the predetermined video used for the target object detection service is captured, thereby improving the target detection performance and quality.

Hereinabove, according to a method and system for improving target detection performance through dynamic learning according to an embodiment of the present disclosure, by dynamically adding pattern data detected from an actual captured video of a target object to pattern data pre-constructed to detect a predetermined target object, it is possible to implement dynamic training (dynamic learning) of including even distortion due to a predetermined noise (e.g., light reflection and/or motion blur, etc.) caused by the acquisition of the actual captured video in base data that can be used when the target object is detected, in a capturing environment different from a capturing environment of the base video used to set the pre-constructed pattern data.

In addition, according to the method and system for improving target detection performance through dynamic learning according to the embodiment of the present disclosure, by performing the dynamic training as described above, it is possible to accumulate pattern data (error data) optimized for a capturing environment (e.g., camera specifications, capturing timing, and/or lighting conditions, etc.), in which the corresponding actual captured video is captured, as base data for detecting the target object.

In addition, according to a method and system for improving target detection performance through dynamic learning according to an embodiment of the present disclosure, by dynamically accumulating a pattern data detected from the actual captured video on base data for detecting the corresponding target object, it is possible to support easy detection of a desired target object by using target detection data specialized for each capturing environment using regardless of noise caused by the capturing environment, thereby improving the detection performance of the corresponding target object.

Meanwhile, embodiments according to embodiments of the present disclosure described above may be implemented in a form of program commands that may be executed through various computer components and may be recorded in a computer-readable recording medium. The computer-readable recording medium may include program instructions, data files, data structures, or the like, alone or a combination thereof. The program commands recorded in the computer-readable recording medium may be especially designed and constituted for the present disclosure or be known to those skilled in a field of computer software. Examples of the computer-readable recording medium may include a magnetic medium such as a hard disk, a floppy disk, or a magnetic tape, an optical recording medium such as a compact disk read only memory (CD-ROM) or a digital versatile disk (DVD), a magneto-optical medium such as a floptical disk, and a hardware device specially configured to store and execute program commands, such as a read only memory (ROM), a random access memory (RAM), a flash memory, or the like. Examples of the program commands include a high-level language code capable of being executed by a computer using an interpreter, or the like, as well as a machine language code made by a compiler. A hardware device may be changed into one or more software modules to perform processing according to the present disclosure, and vice versa.

The specific implementations described in the present disclosure are examples, and do not limit the scope of the present disclosure in any way For brevity of the specification, descriptions of conventional electronic components, control systems, software, and other functional aspects of the systems may be omitted. In addition, the connection or connection members of lines between the components shown in the drawings illustratively represent functional connections and/or physical or circuit connections, and in an actual device, may be represented as various functional connections, physical connections, or circuit connections that are replaceable or additional. In addition, it may not be a necessary component for the application of the present disclosure if there is no specific mention such as "essential," "importantly," etc.

In addition, in the detailed description of the present disclosure described, the present disclosure has been described with reference to a preferred embodiment of the present disclosure, but it can be understood that these skilled in the art or those with ordinary knowledge in the technical field can variously modify and change the present disclosure within the scope of the spirit and technical scope of the present disclosure described in the claims to be described later. Accordingly, the technical scope of the present disclosure should not be limited to the content described in the detailed description of the specification, but should be defined by the claims.

## Claims

1. A method of improving target detection performance through dynamic learning by a target detection application executed by at least one processor of a terminal, the method comprising:
acquiring first target object tracking information including a plurality of first feature points for a target object and a plurality of first descriptors for each of the plurality of first feature points;
acquiring a first captured video obtained by capturing the target object;
extracting target object detection information including a plurality of second feature points and a plurality of second descriptors for each of the plurality of second feature points from the acquired first captured video;
detecting the target object by comparing the extracted target object detection information with the first target object tracking information;
acquiring second target object tracking information obtained by updating the first target object tracking information based on target object detection information for the detected target object; and
providing a target object detection service based on the acquired second target object tracking information.

2. The method of claim 1, wherein the acquiring second target object tracking information includes calculating a plurality of feature point matching scores by comparing each of the plurality of first descriptors and each of the plurality of second descriptors.

3. The method of claims 1or 2, wherein the acquiring second target object tracking information includes:
comparing each of the plurality of calculated feature point matching scores with a predetermined threshold;
detecting a feature point matching score exceeding the predetermined threshold; and
determining the second descriptor having the detected feature point matching score as a third descriptor.

4. The method of any one of the preceding claims, wherein the acquiring second target object tracking information further includes adding the determined third descriptor as a descriptor for detecting and tracking a matched feature point.

5. The method of any one of the preceding claims, wherein the acquiring second target object tracking information includes:
acquiring a rotation parameter (R) value and a translation parameter (T) value for the third descriptor based on the target object detection information and the first target object tracking information; and
matching and storing the acquired rotation parameter value and translation parameter value with the third descriptor.

6. The method of any one of the preceding claims, wherein the detecting the target object includes calculating a comprehensive matching score for all of the plurality of first descriptors and the plurality of second descriptors based on the plurality of calculated feature point matching scores.

7. The method of any one of the preceding claims, wherein the detecting the target object further includes detecting the target object in the first captured video when the calculated comprehensive matching score exceeds a predetermined threshold.

8. A system for improving target detection performance through dynamic learning, comprising:
at least one or more memories; and
at least one or more processors,
wherein an instruction is included in at least one application stored in the memory and executed by the processor to improve target detection performance based on dynamic learning, the instruction being configured to:
control to acquire first target object tracking information including a plurality of first feature points for a target object and a plurality of first descriptors for each of the plurality of first feature points,
control to acquire a first captured video obtained by capturing the target object,
control to extract target object detection information including a plurality of second feature points and a plurality of second descriptors for each of the plurality of second feature points from the acquired first captured video,
control to detect the target object by comparing the extracted target object detection information with the first target object tracking information,
control to acquire second target object tracking information obtained by updating the first target object tracking information based on target object detection information for the detected target object, and
control to provide a target object detection service based on the generated second target object tracking information.

9. The system of claim 8, wherein the application compares each of the plurality of first descriptors and each of the plurality of second descriptors to calculate a plurality of feature point matching scores.

10. The system of claims 8 or 9, wherein the application determines, as a third descriptor, a second descriptor having a feature point matching score exceeding a predetermined threshold among the plurality of calculated feature point matching scores.

11. The system of claims 8 to 10, wherein the application is configured to control to add the determined third descriptor as the first descriptor matching the third descriptor.

12. The system of claim 8 to 11, wherein the application calculates a comprehensive matching score for all of the plurality of first descriptors and the plurality of second descriptors based on the plurality of calculated feature point matching scores.

13. The system of claims 8 to 12, wherein the application detects the target object in the first captured video when the calculated comprehensive matching score exceeds a predetermined threshold.

14. The system of claims 8 to 13, wherein the application is configured to control to transmit information on a camera specification of the terminal in which the application is installed to a database server, and receive tenth target object tracking information for tracking a first target object matching the camera specification information from the database server.

15. The system of claims 8 to 14, wherein the application includes twentieth target object tracking information matching a first capturing time, and twentieth-one target object tracking information matching a second capturing time after the first capturing time in order to track the first target object from the database server.

16. The system of claims 8 to 15, wherein the application is configured to control to track the first target object based on the twentieth target object tracking information in the image captured at the first capturing time, and receive the twentieth-one target object tracking information in the video captured at the second capturing time.

17. The system of claims 8 to 16, wherein the application is configured to control to receive twentieth-two target object tracking information matching third capturing time after the second capturing time while tracking the first target object through the twentieth-one target object tracking information based on the image acquired at the second capturing time.
